# EUROPÄISCHE PATENTSCHRIFT

(11) **EP 1 106 478 B1**
(45) Veröffentlichungstag und Bekanntmachung des Hinweises auf die Patenterteilung: **21.07.2010**
(21) Anmeldenummer: 00123017.6
(22) Anmeldetag: 24.10.2000
(51) Int. Cl.: B62D 21/11, B60G 21/05, B60G 7/00

(54) **Achsträger für Kraftfahrzeuge**
Axle support for motor vehicles
Support d'essieu pour véhicules automobiles

(30) Priorität: 11.12.1999 DE 19959814
(43) Veröffentlichungstag der Anmeldung: 13.06.2001
(73) Patentinhaber: BENTELER AG, D-33104 Paderborn (DE)
(72) Erfinder: Härtel, Wulf, 33184 Altenbeken (DE); Scherp, Markus, 34474 Diemelstadt (DE)
(74) Vertreter: Ksoll, Peter

(56) Entgegenhaltungen:
- DE-A- 10 007 193
- DE-C- 19 501 508
- DE-U- 29 809 241
- JEISSING B ET AL: "DAS FAHRWERK DES NEUEN AUDI A6" ATZ AUTOMOBILTECHNISCHE ZEITSCHRIFT, FRANCKH'SCHE VERLAGSHANDLUNG. STUTTGART, DE, Bd. 99, Nr. SUPPL 3, 1. März 1997 (1997-03-01), Seiten 22-24,26-28,, XP000682340 ISSN: 0001-2785

## Beschreibung

Die Erfindung betrifft Achsträger für Kraftfahrzeuge.

Bei der hydroformtechnischen Herstellung von ein- oder mehrstückig aus einem Rohr geformten Achsträgem ebenso wie bei Pressschalenkonstruktionen sind Biegungen bzw. bogenförmig gekrümmte Abschnitte erforderlich, um dem Achsträger eine an die jeweilige Einbausituation angepasste Gestalt zu geben. Durch die Umformvorgänge kommt es jedoch, insbesondere im Bereich von Biegungen, zu einer Verringerung der Wandstärken. Diese Wandstärkenreduzierung kann zu einer Verminderung der Dauerfestigkeit und der Knicksteifigkeit führen.

In der Atz Automobiltechnische Zeitschrift, Fränkische Verlagshandlung, DE, Bd. 99, Nr. SUPPL 3, 01.03.1997, Seiten 22 - 24, 26 - 28, XP 000682340 (D1) ist das Fahrwerk eines Audi A6 beschrieben. Dort ist als Bild 2 auf Seite 23 ein Vorderachs-Hilfsrahmen abgebildet. Dieser weist einen U-förmig konfigurierten Rahmen in Hohlbauweise auf, welcher ein Querrohr und über gekrümmte Übergangsabschnitte im Wesentlichen orthogonal zum Querrohr ausgerichtete Längsrohre umfasst. Jedes Längsrohr weist einen Bogenabschnitt auf.

Im Umfang des DE 298 09 241 U1 ist eine Verbundlenkerachse bekannt, mit einem geraden Querträger, der einen V- oder U-förmigen Torsionsabschnitt aufweist und annähernd kreisförmig oder oval ausgebildete rohrförmige Endabschnitte besitzt. Zur Verstärkung der gerade verlaufenden Übergangsabschnitte vom Torsionsabschnitt zu den Endabschnitten sind diese mit einer inneren partiellen Ausschäumung aus einem Mehrkomponenten-Kunststoffschaum versehen. Mit dieser Verbundlenkerachse wurden sehr gute Erfahrungen gemacht.

Der Erfindung liegt ausgehend vom Stand der Technik die Aufgabe zugrunde, einen Achsträger sowohl schwingungstechnisch als auch hinsichtlich der Dauerfestigkeit und der Knicksteifigkeit zu verbessern.

Die Erfindung zeigt zwei eigenständige Lösungen dieser Aufgabe auf.

Erfindungsgemäß kommen hydrogeformte gebogene Stahl- oder Aluminiumrahmen zum Einsatz. Auch Pressschalenlösungen als Rahmen sind möglich. Ein Rahmen umfasst ein Querrohr und über gekrümmte Übergangsabschnitte im wesentlichen orthogonal zum Querrohr ausgerichtete Längsrohre. Die Längsrohre weisen einen in der Einbausituation des Achsträgers gesehen vom Querrohr abwärts gekrümmten Bogenabschnitt auf. Oberhalb der Bogenabschnitte verläuft im Kraftfahrzeug der Antriebsstrang. In den gekrümmten Bogenabschnitten der Längsrohre ist der Rahmen durch eine innere Ausschäumung aus einem aushärtenden Schaum versteift.

Gemäß Patentanspruch 1 besteht die innere Ausschäumung aus einem Epoxid-Schaum mit einer Dichte zwischen 0,65 bis 0,75 kg/l oder aus einem Aluminium-Schaum mit einer Dichte zwischen 0,65 bis 0,75 kg/l.

Der Achsträger gemäß Patentanspruch 2 kennzeichnet sich durch eine innere Ausschäumung des Bogenabschnitts aus Polyurethan-Schaum mit einer Dichte zwischen 0,07 bis 0,7 kg/l.

Der technologische Zusammenfassung der eigenständigen Lösungen besteht darin, gezielt die durch den Umformvorgang geschwächten Bogenabschnitte durch eine innere Ausschäumung zu verstärken. Die Schäume bewirken eine Erhöhung der Dauerfestigkeit und Knicksteifigkeit bei einem Crashfall. Ebenso wirkt sich die Ausschäumung positiv auf das Schwingungsverhalten des Achsträgers aus.

Vorteilhafte Ausgestaltungen und Weiterbildungen der erfindungsgemäßen Achsträger sind in den abhängigen Ansprüchen 3 bis 9 wiedergegeben.

Bei einer vorteilhaften Ausführungsform des erfindungsgemäßen Achsträgers sind auch die gekrümmten Übergangsabschnitte vom Querrohr zu den Längsrohren mit einer inneren Ausschäumung versehen. Desweiteren besteht die Möglichkeit, den Rahmen komplett auszuschäumen.

Zum Einsatz gelangen Ein- oder Mehrkomponentenschäume. Polyurethanschäume sind Zweikomponentensysteme mit einer Polyol-Komponente und einer IsocyanatKomponente. Epoxidbasierende Schäume können in Form von Ein- oder Zweikomponentensystemen Anwendung finden. Bei ersteren handelt es sich um Schaumformteile mit schon definierter Gestalt, die bei der Herstellung in den Rahmen eingesetzt werden und dort unter bestimmten Temperaturen aufschäumen und aushärten. Bei den Zweikomponentensystemen handelt es sich um Spritzschäume, die flüssig in einem Mischkopf mit einer Mischpatrone zusammengeführt und entweder manuell oder robotergesteuert in den Rahmen eingebracht werden. Es kommt ein Epoxidschaum zur Anwendung mit einer Dichte zwischen 0,65 bis 0,75 kg/l.

Die Verwendung von Aluminiumschaum bietet sich insbesondere bei Rahmen aus Aluminium bzw. einer Aluminiumlegierung an.

Je nach Typ des Achsträgers und Einbausituation kann die Schaumdichte entsprechend des erforderlichen Energieaufnahmevermögens eingestellt werden.

Die Ausschäumung erhöht die Knicksteifigkeit im Bereich der durch die Konstruktion bestimmten Durchbiegung. Die Ausschäumung führt zu einer Abstützung der inneren Rohrwand und damit zu einer Erhöhung des Energieaufnahmevermögens und der Beulsteifigkeit. Auf diese Weise wird einem Einbeulen des Rahmens entgegengewirkt.

Die Ausschäumung führt ferner zu einer Unterstützung der durch die Hydroform- oder Biegeprozesse geschwächten Wandstärke. Hierdurch können unter Dauerlast möglicherweise auftretende Schäden, wie Rissbildungen, entgegengewirkt bzw. vermieden werden.

Durch die gezielte Ausschäumung ist sogar eine Wanddickenreduktion in weniger belasteten Bereichen denkbar.

Weiterhin zeichnet sich der erfindungsgemäße Achsträger auch durch sehr gutes Schwingungsverhalten aus, da die partielle Ausschäumung zu einer Erhöhung der Dämpfung des Rahmens führt. Eigenschwingungen des Achsträgers werden durch die Ausschäumung gedämpft. Kritische Schwingungsbereiche im Betrieb werden vermieden.

Die Erfindung ist nachfolgend anhand zweier in den Zeichnungen dargestellter Ausführungsbeispiele näher beschrieben. Es zeigen:
- Figur 1: in perspektivischer Ansicht eine erste Ausführungsform eines Achsträgers und
- Figur 2: ebenfalls in perspektivischer Ansicht eine zweite Ausführungsform eines Achsträgers.

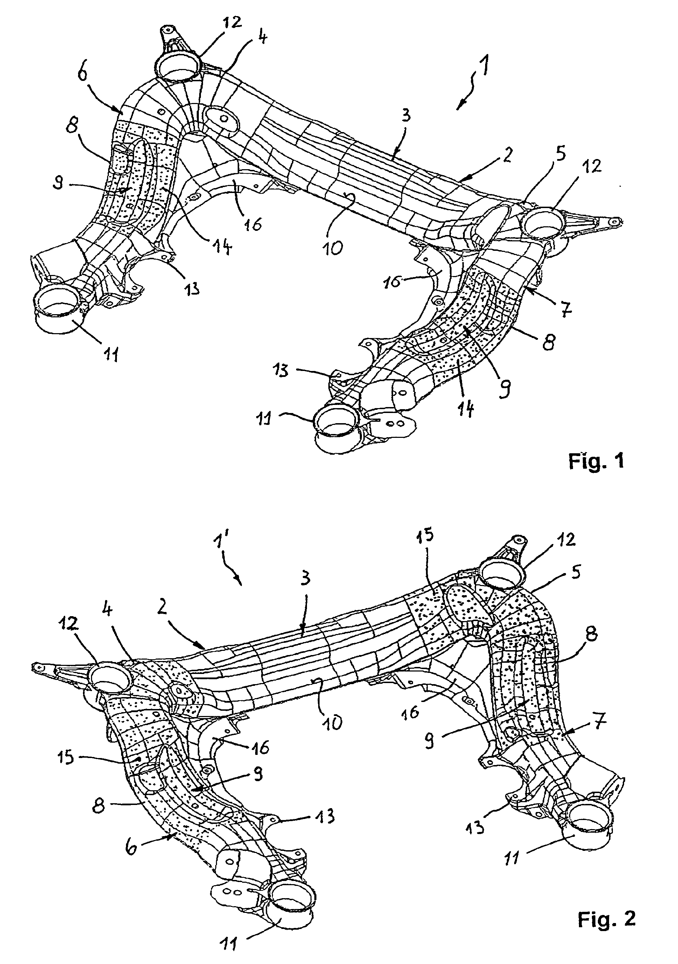

Die Figuren 1 und 2 zeigen jeweils in perspektivischer Ansicht einen Achsträger 1 bzw. 1' für ein Kraftfahrzeug. Die Achsträger 1 bzw. 1' entsprechen einander in ihrer konstruktiven Gestaltung. Von daher ist deren grundsätzliche Konfiguration gemeinsam beschrieben.

Der Achsträger 1, 1' besitzt einen U-förmig konfigurierten Rahmen 2 in Hohlbauweise mit einem Querrohr 3 und hieran über gekrümmte Übergangsabschnitte 4, 5 im wesentlichen orthogonal zum Querrohr 3 ausgerichteten Längsrohren 6, 7. Die Längsrohre 6, 7 weisen jeweils einen in Bildebene abwärts gekrümmt verlaufenden Bogenabschnitt 8 auf mit einer Einmuldung 9. Eingebaut in einem Kraftfahrzeug verläuft oberhalb der Bogenabschnitte 8 bzw. der Einmuldungen 9 der Antriebsstrang.

Man erkennt ferner, dass das Querrohr 3 auf der innen liegenden Seite des Rahmens 2 im mittleren Bereich durch eine Abflachung 10 im Querschnitt verringert ist. Mit 11 und 12 sind Lageraufnahmen des Achsträgers 1, 1' bezeichnet. Die Getriebeaufhängung trägt das Bezugszeichen 13.

Beim Achsträger 1 sind die Bogenabschnitte 8 durch eine partielle innere vollflächige Ausschäumung 14 versteift.

Der Achsträger 1' weist eine Ausschäumung 15 auf, die sich von den Bogenabschnitten 8 bis über die Übergangsabschnitte 4, 5 in das Querrohr 3 erstreckt. Die Wanddicke des Rahmens 2 kann zwischen 1 mm und 2,8 mm variieren. Gängig sind heute Wandstärken zwischen 1,9 bis 2,5 mm. Als Werkstoff für den Rahmen 2 bietet sich neben den gängigen Stahlsorten auch die Verwendung von Edelstahl oder Aluminium bzw. einer Aluminiumlegierung an.

Die Ausschäumung 14, 15 besteht aus einem aushärtenden Schaum. Für die Praxis bietet sich der Einsatz von Polyurethanschaum mit einer Dichte von ca. 0,7 kg/l oder einem Epoxidschaum mit einer Dichte um 0,7 kg/l an. Auch der Einsatz von Aluminiumschäumen mit Dichten um 0,7 kg/l verspricht fahrwerkstechnische Verbesserungen.

Die Ausschäumung 14 bzw. 15 erhöht die Knicksteifigkeit im Bereich der konstruktionsbedingt umgeformten Bogenabschnitte 8 mit ihren eingezogenen Einmuldungen 9 und den Übergangsabschnitten 4, 5. Die durch den Umformprozess (Hydroformen oder Biegeumformung) geschwächte Wandstärke im Bereich der Bogenabschnitte 8 bzw. der Übergangsabschnitte 4, 5 sind von innen verstärkt. Diese Abstützung hat eine Erhöhung der Energieaufnahme zur Folge und die Beulsteifigkeit wird erhöht. Ferner wird das Schwingungsverhalten der Achsträger 1, 1' positiv beeinflusst, da die partielle Ausschäumung 14, 15 zu einer Erhöhung der Dämpfung des Rahmens 2 führt.

Die Übergangsabschnitte 4, 5 sind zusätzlich durch ein Stegblech 16 im Zwickel zwischen dem Querrohr 3 und jedem Längsrohr 6 bzw. 7 versteift sind.

### Bezugszeichenaufstellung

- 1 -: Achsträger
1'- Achsträger
- 2 -: Rahmen
- 3 -: Querrohr
- 4 -: Übergangsabschnitt
- 5 -: Übergangsabschnitt
- 6 -: Längsrohr
- 7 -: Längsrohr
- 8 -: Bogenabschnitt
- 9 -: Einmuldung 10 - Abflachung
- 11 -: Lageraufnahme
- 12 -: Lageraufnahme
- 13 -: Getriebeaufhängung
- 14 -: Ausschäumung
- 15 -: Ausschäumung 16 - Stegblech

## Patentansprüche

1. Achsträger für ein Kraftfahrzeug in Form eines U-förmig konfigurierten Rahmens (2) in Hohlbauweise, welcher ein Querrohr (3) und über gekrümmte Übergangsabschnitte (4, 5) im Wesentlichen orthogonal zum Querrohr (3) ausgerichtete Längsrohre (6, 7) umfasst, wobei jedes Längsrohr (6, 7) einen Bogenabschnitt (8) mit einer Einmuldung (9) aufweist, **dadurch gekennzeichnet, dass** der Bogenabschnitt (8) mit einer inneren Ausschäumung (14, 15) aus Epoxid-Schaum mit einer Dichte zwischen 0,65 bis 0,75 kg/l oder aus Aluminium-Schaum mit einer Dichte zwischen 0,65 bis 0,75 kg/l versehen ist.

2. Achsträger für ein Kraftfahrzeug in Form eines U-förmig konfigurierten Rahmens (2) in Hohlbauweise, welcher ein Querrohr (3) und über gekrümmte Übergangsabschnitte (4, 5) im Wesentlichen orthogonal zum Querrohr (3) ausgerichtete Längsrohre (6, 7) umfasst, wobei jedes Längsrohr (6, 7) einen Bogenabschnitt (8) mit einer Einmuldung (9) aufweist, **dadurch gekennzeichnet, dass** der Bogenabschnitt (8) mit einer inneren Ausschäumung (14, 15) aus Polyurethan-Schaum mit einer Dichte zwischen 0,07 bis 0,7 kg/l versehen ist.

3. Achsträger nach einem der Ansprüche 1 oder 2, **dadurch gekennzeichnet, dass** die Übergangsabschnitte (4, 5) eine innere Ausschäumung (14, 15) besitzen.

4. Achsträger nach einem der Ansprüche 1 bis 3, **dadurch gekennzeichnet, dass** die Wanddicke des Rahmens (2) zwischen 1,00 mm bis 2,80 mm beträgt.

5. Achsträger nach einem der Ansprüche 1 bis 4, **dadurch gekennzeichnet, dass** die Wanddicke des Rahmens (2) zwischen 1,90 mm bis 2,50 mm beträgt.

6. Achsträger nach einem der Ansprüche 1 bis 5, **dadurch gekennzeichnet, dass** der Rahmen (2) aus Stahl besteht.

7. Achsträger nach einem der Ansprüche 1 bis 6, **dadurch gekennzeichnet, dass** der Rahmen (2) aus Edelstahl besteht.

8. Achsträger nach einem der Ansprüche 1 bis 6, **dadurch gekennzeichnet, dass** der Rahmen (2) aus Aluminium besteht.

9. Achsträger nach einem der Ansprüche 1 bis 8, **dadurch gekennzeichnet, dass** jeder Übergangsabschnitt (4, 5) durch ein Stegblech (16) im Zwickel zwischen dem Querrohr (3) und einem Längsrohr (6, 7) versteift ist.

## Claims

1. Cross member for a motor vehicle in the form of a frame (2), which is configured so as to be U-shaped, in a hollow design, which frame (2) encompasses a cross tube (3) and longitudinal tubes (6, 7) which are aligned substantially orthogonally to the cross tube (3) across curved transitional portions (4, 5), wherein each longitudinal tube (6, 7) has an arcuate portion (8) with a depression (9), **characterised in that** the arcuate portion (8) is provided with an inner foaming (14, 15) composed of epoxide foam with a density between 0.65 and 0.75 kg/l or composed of aluminium foam with a density between 0.65 and 0.75 kg/l.

2. Cross member for a motor vehicle in the form of a frame (2), which is configured so as to be U-shaped, in a hollow design, which frame (2) encompasses a cross tube (3) and longitudinal tubes (6, 7) which are aligned substantially orthogonally to the cross tube (3) across curved transitional portions (4, 5), wherein each longitudinal tube (6, 7) has an arcuate portion (8) with a depression (9), **characterised in that** the arcuate portion (8) is provided with an inner foaming (14, 15) composed of polyurethane foam with a density between 0.07 and 0.7 kg/l.

3. Cross member according to one of Claims 1 or 2, **characterised in that** the transitional portions (4, 5) possess an inner foaming (14, 15).

4. Cross member according to one of Claims 1 to 3, **characterised in that** the wall thickness of the frame (2) is between 1.00 mm and 2.80 mm.

5. Cross member according to one of Claims 1 to 4, **characterised in that** the wall thickness of the frame (2) is between 1.90 mm and 2.50 mm.

6. Cross member according to one of Claims 1 to 5, **characterised in that** the frame (2) is composed of steel.

7. Cross member according to one of Claims 1 to 6, **characterised in that** the frame (2) is composed of stainless steel.

8. Cross member according to one of Claims 1 to 6, **characterised in that** the frame (2) is composed of aluminium.

9. Cross member according to one of Claims 1 to 8, **characterised in that** each transitional portion (4, 5) is reinforced by a web plate (16) in the space between the cross tube (3) and a longitudinal tube (6, 7).

## Revendications

1. Support d'essieu pour un véhicule automobile sous la forme d'un cadre (2) configuré en forme de U en construction creuse, qui comporte un tube transversal (3) et des tubes longitudinaux (6, 7) orientés essentiellement orthogonalement au tube transversal (3) par le biais de sections de transition (4, 5) coudées, chaque tube longitudinal (6, 7) présentant une section d'arc (8) avec une cavité (9), **caractérisé en ce que** la section d'arc (8) est pourvue d'un moussage (14, 15) intérieur en mousse époxy avec une densité comprise entre 0,65 et 0,75 kg/l ou en mousse d'aluminium avec une densité comprise entre 0,65 et 0,75 kg/l.

2. Support d'essieu pour un véhicule automobile sous la forme d'un cadre (2) configuré en forme de U en construction creuse qui comporte un tube transversal (3) et des tubes longitudinaux (6, 7) orientés essentiellement orthogonalement au tube transversal (3) par le biais de sections de transition (4, 5) coudées, chaque tube longitudinal (6, 7) présentant une section d'arc (8) avec une cavité (9), **caractérisé en ce que** la section d'arc (8) est pourvue d'un moussage (14, 15) intérieur en mousse de polyuréthane avec une densité comprise entre 0,07 et 0,7 kg/l.

3. Support d'essieu selon l'une quelconque des revendications 1 ou 2, **caractérisé en ce que** les sections de transition (4, 5) possèdent un moussage intérieur (14, 15).

4. Support d'essieu selon l'une quelconque des revendications 1 à 3, **caractérisé en ce que** l'épaisseur de paroi du cadre (2) est comprise entre 1 mm et 2,80 mm.

5. Support d'essieu selon l'une quelconque des revendications 1 à 4, **caractérisé en ce que** l'épaisseur de paroi du cadre (2) est comprise entre 1,90 mm et 2,50 mm.

6. Support d'essieu selon l'une quelconque des revendications 1 à 5, **caractérisé en ce que** le cadre (2) est en acier.

7. Support d'essieu selon l'une quelconque des revendications 1 à 6, **caractérisé en ce que** le cadre (2) est en acier spécial.

8. Support d'essieu selon l'une quelconque des revendications 1 à 6, **caractérisé en ce que** le cadre (2) est en aluminium.

9. Support d'essieu selon l'une quelconque des revendications 1 à 8, **caractérisé en ce que** chaque section de transition (4, 5) est renforcée par une tôle d'âme (16) dans le coin entre le tube transversal (3) et un tube longitudinal (6, 7).
